# EUROPÄISCHE PATENTANMELDUNG

(11) **EP 4 685 773 A1**
(43) Veröffentlichungstag der Anmeldung: **28.01.2026**
(21) Anmeldenummer: 25192006.2
(22) Anmeldetag: 25.07.2025
(51) Int. Cl.: G09B 21/00, G09F 7/16

(54) **VERFAHREN ZUR HERSTELLUNG EINES TAKTILEN SCHILDES UND EIN MIT DIESEM VERFAHREN HERGESTELLTES TAKTILES SCHILD**

(30) Priorität: 26.07.2024 DE 102024121422
(71) Anmelder: BARRIEREFREIHEIT GmbH Leitsysteme für blinde und seheingeschränkte Menschen, 08340 Schwarzenberg/Erzgeb (DE)
(72) Erfinder: Schott, Ivonne, 08340 Schwarzenberg (DE); Stockmar, Tino, 08315 Lauter-Bernsbach (DE)
(74) Vertreter: Findeisen Neumann Scheit Partnerschaft mbB

(57) **Zusammenfassung**

Die Erfindung betrifft ein Verfahren zur Herstellung eines taktilen Schildes mit taktilen Strukturen zur Orientierung von blinden und seheingeschränkten Menschen, wobei das taktile Schild eine gekrümmte Grundfläche zur Auflage auf eine das taktile Schild tragende gekrümmte Oberfläche eines Trägerobjektes aufweist. Weiterhin betrifft die Erfindung ein mit dem Verfahren hergestelltes taktiles Schild. Aufgabe der Erfindung ist es daher, ein Verfahren zur Herstellung metallischer taktiler Schilder für gekrümmte Oberflächen vorzuschlagen, bei dem ein Strecken der taktilen Erhebungen vermieden wird. Weiterhin soll das Risiko scharfkantiger Ecken weiter verringert sowie die Qualität der Oberflächen der taktilen Strukturen gleichmäßiger und qualitativ hochwertiger sein. Diese Aufgabe wird mit einem Verfahren mit den folgenden Schritten gelöst: a) Bereitstellung eines gekrümmten Plattenelementes, b) Ausformung der taktilen Strukturen auf dem Grundkörper, c) Einfärbung der Oberfläche der der Grundfläche gegenüberliegenden Fläche mit den taktilen Strukturen und d) Entfernung der Einfärbung an zumindest einem Teil der taktilen Strukturen. (Fig. 1c)

## Beschreibung

Die Erfindung betrifft ein Verfahren zur Herstellung eines taktilen Schildes mit taktilen Strukturen zur Orientierung von blinden und seheingeschränkten Menschen, wobei das taktile Schild eine gekrümmte Grundfläche zur Auflage auf eine das taktile Schild tragende gekrümmte Oberfläche eines Trägerobjektes aufweist. Weiterhin betrifft die Erfindung ein mit dem Verfahren hergestelltes taktiles Schild.

Taktile Schilder dienen der Orientierung von blinden und seheingeschränkten Menschen. Derartige Schilder werden insbesondere in Gebäuden oder Anlagen als Orientierungshilfen oder Wegweiser genutzt. Hierzu sind diese Schilder mit für seheingeschränkte oder blinde Menschen tastbaren Erhebungen, vorzugsweise Brailleschrift, ausgestattet. Die tastbaren Erhebungen codieren dabei beispielsweise Informationen über den Standort, die Etage oder andere wichtige Hinweise, die für die Orientierung und Navigation von blinden oder seheingeschränkten Menschen erforderlich sind. Meist weisen diese Schilder zusätzlich auch eine Profilschrift auf, die ebenfalls als tastbare Erhebung ausgeführt ist. Diese tastbaren Erhebungen sind beispielsweise als Buchstaben, Zahlen oder Symbolen ausgeführt, die durch Berührung erfühlt werden können. Vorzugsweise ist die Profilschrift als Pyramidenschrift ausgeführt, da diese durch eine Prismenform der Buchstaben optimal ertastet werden kann. Aus dem Stand der Technik sind neben aufklebbaren Folien insbesondere aus Metall gefertigte taktile Orientierungsschilder bekannt. Diese sind gegenüber Folienschilder deutlich resistenter gegen Vandalismus.

Taktile Schilder sind in vielen Ländern gesetzlich vorgeschrieben und werden zunehmend in verschiedenen Bereichen wie Flughäfen, Bahnhöfen, Einkaufszentren und anderen öffentlichen Orten installiert.

Damit auch seheingeschränkte Menschen mit einem Restsehvermögen die Orientierungsschilder optisch lesen können, wird meist ein hoher Farbkontrast der Profilschrift vorgeschrieben. Insbesondere Taktile Schilder an Handläufen (z.B. Treppengeländer) unterstützen blinde und seheingeschränkte Menschen bei der Orientierung. Handläufe weisen meist einen runden oder ovalen Querschnitt auf.

Die DE 20 2012 101 664 U1 beschreibt ein Verfahren zur Herstellung metallischer taktiler Schilder, deren tastbare Erhebungen kontrastreich ausgeführt sind. Das Verfahren sieht dabei die folgenden Schritte vor. Zunächst wird ein metallischer Grundkörper in der Form einer ebenen Aluminiumplatte bereitgestellt. Durch Fräsen wird dann in einigen Bereichen Material des Grundkörpers entfernt, in anderen Bereichen wird kein Material entfernt. Bereiche, bei denen kein Material entfernt wird, bilden am Ende die taktilen Strukturen. Nach dem Fräsvorgang wird der Grundkörper mit den taktilen Strukturen einem Oxidationsschritt (Eloxalschritt) unterzogen, sodass eine Oxidschicht an der Metalloberfläche erzeugt wird. Bei der Oxidation der Metalloberfläche wird gleichzeitig ein Färbemittel eingesetzt, um die gebildete Oxidschicht einzufärben. Optional werden nach dem Oxidationsschritt die Seitenwände der taktilen Strukturen angeschrägt, d. h. mit einer Neigung versehen, sodass die Kanten der taktilen Strukturen weniger scharfkantig sind und die die Verletzungsgefahr an Händen und Fingern vermindert wird. Zur Erhöhung des optischen Kontrastes der taktilen Erhebungen wird die zuvor gebildete Oxidischicht auf der Oberfläche der taktilen Strukturen wieder entfernt, beispielsweise durch abschleifen. Um das so hergestellte taktile Orientierungsschild an einem Handlauf mit rundem oder ovalem Querschnitt anbringen zu können, wird dieses in vorgefertigten Formen anschließend mittels einer Hydraulikpresse gebogen. Nachteilig ist allerdings, dass die vorgefertigten Formen auf das jeweilige taktile Orientierungsschild angepasst sein müssen. Insbesondere müssen diese Formen Ausnehmungen zur Aufnahme der individuellen taktilen Strukturen aufweisen, damit diese beim Biegen des gesamten taktilen Orientierungsschilds nicht zerdrückt werden. Für jedes taktilen Orientierungsschild ist damit eine eigene Form für den Biegeprozess notwendig. Dies erfordert einen hohen Materialeinsatz. Weiterhin ist es nachteilig, dass sich beim Biegen des gesamten taktilen Orientierungsschilds die taktilen Erhebungen strecken, was die Lesbarkeit bzw. die Ertastbarkeit dieser Erhebungen erschwert. Ein Strecken der taktilen Erhebungen nimmt mit steigenden Biegeradius zu. Weiterhin ist es nachteilig, dass ein Anschrägen der Seitenwände der taktilen Strukturen nach dem Oxidationsschritt dennoch scharfkantige Ecken hinterlassen kann, was weiterhin ein Verletzungsrisiko für die Benutzer der taktilen Schilder birgt.

Aufgabe der Erfindung ist es daher, ein Verfahren zur Herstellung metallischer taktiler Schilder für gekrümmte Oberflächen vorzuschlagen, bei dem ein Strecken der taktilen Erhebungen vermieden wird und der Materialeinsatz im Herstellungsprozess verringert ist. Weiterhin soll das Risiko scharfkantiger Ecken weiter verringert sowie die Qualität der Oberflächen der taktilen Strukturen gleichmäßiger und qualitativ hochwertiger sein.

Diese Aufgabe wird mit einem Verfahren mit den Merkmalen des Anspruchs 1 gelöst. Vorteilhafte Ausgestaltungen dieses Verfahrens finden sich in den Ansprüchen 2 bis 13.

Das erfindungsgemäße Verfahren umfasst dabei die folgenden Schritte:
a. Bereitstellung eines gekrümmten Plattenelementes mit der gekrümmten Grundfläche,
b. Ausformung der taktilen Strukturen auf der der Grundfläche gegenüberliegenden Fläche des gekrümmten Plattenelementes,
c. Einfärbung der Oberfläche der der Grundfläche gegenüberliegenden Fläche mit den taktilen Strukturen,
d. Entfernung der Einfärbung an zumindest einem Teil der taktilen Strukturen.

Kerngedanke ist zunächst, dass das als Ausgangspunkt dienende Plattenelement bereits vor dem Ausbilden der taktilen Strukturen gekrümmt wird. Dadurch ist kein Biegen nach dem Ausbilden der taktilen Strukturen erforderlich, was ein Strecken der ausgebildeten taktilen Strukturen vermeidet und auch keine aufwendig gestalteten Formen für einen Biegeprozess erfordert.

Die Farbwahl bei der Einfärbung kann derart angepasst werden, dass ein hoher optischer Kontrast zwischen Bereichen mit Einfärbung und Bereichen mit wieder entfernter Einfärbung erzielt wird. Zum anderen können über die Farbwahl auch Kundenwünsche zur Farbgestaltung des taktilen Schildes abgedeckt werden.

In einer Ausgestaltung des Verfahrens wird zur Bereitstellung des gekrümmten Plattenelementes zunächst ein ebenes Plattenelement bereitgestellt, welches mit einem der gekrümmten Oberfläche des Trägerobjektes entsprechenden Biegeradius mittels eines Umformprozesses gekrümmt wird. Dies ermöglicht eine passgenaue und individualisierbare Bereitstellung des gekrümmten Plattenelementes.

Es wird vorgeschlagen, dass das Material des Plattenelementes Metall oder Kunststoff ist. Je nach Material kann eine Erwärmung des Plattenelementes im Umformprozess vorteilhaft sein.

Weiterhin wird vorschlagen, dass im Falle eines aus Metall gebildeten Plattenelementes der Umformprozess mit einer hydraulischen Presse erfolgt.

In einer Ausführung ist vorgesehen, dass die Einfärbung der Oberfläche der der Grundfläche gegenüberliegenden Fläche mittels einer Farbbeschichtung erfolgt. Bei einer weiteren Ausführung kann im Falle eines aus Metall gebildeten Plattenelementes die Einfärbung auch mittels Durchführung eines Oxidationsschritts unter Zugabe eines Färbemittels erfolgen.

In einer ersten Variante erfolgt die Ausformung der taktilen Strukturen an dem gekrümmten Plattenelement durch ein 3D-Fräsen des Plattenelementes an der der Grundfläche gegenüberliegenden Fläche des Plattenelementes, wobei dabei durch Entfernen von Material des Plattenelementes Erhebungen herausgearbeitet werden, welche die taktilen Strukturen bilden. Beim 3D-Fräsen als subtraktives Verfahren wird die Schichtdicke des Grundkörpers lokal verringert, sodass die Bereiche, an denen kein Materialabtrag (oder nur ein geringerer Materialabtrag) erfolgt, nach dem Abtragen herausragen. Zum Ausbilden der taktilen Strukturen wird also in die Oberfläche des Grundkörpers hineingearbeitet. Durch das 3D-Fräsen wird sichergestellt, dass die gekrümmte Oberfläche des gekrümmten Grundkörpers bearbeitet werden kann.

In einer weiteren Variante ist vorgesehen, das im Falle eines aus Metall gebildeten Plattenelementes die Ausformung der taktilen Strukturen durch Auftragen eines metallischen Werkstoffs mittels eines Metall-3D-Druckverfahrens erfolgt oder dass im Falle eines aus Kunststoff gebildeten Plattenelementes die Ausformung der taktilen Strukturen durch Auftragen eines Kunststoffs mittels eines Kunststoff-3D-Druckverfahrens erfolgt. Beim 3D-Drucken als additives Verfahren wird der Werkstoff (Metall bzw. Kunststoff) auf der gekrümmten Oberfläche des gekrümmten Plattenelementes aufgetragen, sodass damit die taktilen Strukturen aufgebaut werden. Zum Ausbilden der taktilen Strukturen wird also zusätzliches Material auf der der Grundfläche gegenüberliegenden Fläche des Plattenelementes abgelagert. Das Auftragen der taktilen Strukturen kann in einer einzelnen Schicht oder in mehreren übereinander liegenden Schichten erfolgen.

Eine Ausgestaltung sieht vor, dass im Falle des metallischen Werkstoffs als Metall-3D-Druckverfahren ein Metall-Laser-Sinterverfahren oder ein Elektronenstrahlschmelzverfahren eingesetzt wird oder dass im Falle des Kunststoffs als Kunststoff-3D-Druckverfahren das Fused Deposition Modeling oder das selektive Lasersintern eingesetzt wird. Allerdings ist die Erfindung nicht grundsätzlich auf diese Metall-3D-Druckverfahren bzw. Kunststoff-3D-Druckverfahren beschränkt.

Es wird vorgeschlagen, dass beim Auftragen des metallischen Werkstoffs oder des Kunststoffs zumindest abschnittsweise Seitenwände der taktilen Strukturen angeschrägt ausgebildet werden. Durch eine Anschrägung der Seitenwände der taktilen Strukturen kann eine als Pyramidenschrift ausgebildete Profilschrift mit einer Prismenform der Buchstaben erzeugt werden. Die Prismenform ermöglicht einer seheingeschränkten Person das Ertasten der Buchstaben entlang der schmalen Oberkante der taktilen Strukturen. Für den Sehenden entsteht durch die breiterer Sockellinie der taktilen Strukturen ein gleichmäßiges und gut erkennbares Schriftbild. Die Anschrägung der Seitenwände ist hier so zu verstehen, dass die Seitenwände der taktilen Strukturen, gegenüber der Oberfläche, auf der die taktilen Strukturen herausgearbeitet oder aufgebaut werden, geneigt sind. Zwischen einem Flächennormal der Oberfläche am Ort der Seitenwand und der Seitenwand selbst wird also ein Winkel (größer 0 °) eingeschlossen. Im Falle einer nichtebenen Oberfläche ist dann das Flächennormal einer am Ort der Seitenwand an der Oberfläche anliegenden Tangentialebene gemeint.

In einer weiteren Ausführung kann das Auftragen des metallischen Werkstoffs oder Kunststoffs zunächst auch ohne Anschrägung erfolgen und anschließend vor der Einfärbung mittels 3D-Fräsen angeschrägt werden. Ebenso ist es möglich, dass beim Auftragen des metallischen Werkstoffs oder des Kunststoffs mittels 3D-Druckverfahren eine erste Anschrägung der Seitenwände der taktilen Strukturen erfolgt und mittels 3D-Fräsen diese Anschrägung weiter ausgearbeitet wird.

Generell wird durch ein Anschrägen der Seitenwände der taktilen Strukturen vor dem Einfärbeschritt die Qualität der Oberflächen der taktilen Strukturen nach dem Abtragen der Einfärbeschritt gleichmäßiger und qualitativ hochwertiger, als bei einem vollständigen Anschrägen der Seitenwände erst nach dem Einfärbeschritt. Dies verringert weiterhin das Risiko scharfkantiger Ecken.

Eine vorteilhafte Ausführung sieht vor, dass die Entfernung der Einfärbung an zumindest einem Teil der taktilen Strukturen mittels 3D-Fräsen erfolgt. Durch das 3D-Fräsen wird sichergestellt, dass auch komplex ausgeführte taktile Strukturen auf der gekrümmten Oberfläche des gekrümmten Grundkörpers vollständig bearbeitet werden können.

Es wird vorgeschlagen, dass das 3D-Fräsen mittels einer 3-Achsen-Fräse oder einer 4-Achsen-Fräse oder einer 5-Achsen-Fräse oder einer 6-Achsen-Fräse erfolgt.

Es wird vorgeschlagen, dass im Falle des aus Metall gebildeten Plattenelementes das Metall Aluminium oder eine Aluminiumlegierung ist. Aluminium und Aluminiumlegierungen sind mittels Eloxalverfahren verhältnismäßig einfach einzufärben. Weiterhin ist sowohl das Fräsen als auch das 3D-Drucken von Aluminium und Aluminiumlegierungen wirtschaftlich.

Weiterhin wird ein taktiles Schild vorgeschlagen, welches mit dem erfindungsgemäßen Verfahren hergestellt worden ist.

Nachfolgend werden Ausführungsbeispiele der Erfindung anhand der Zeichnungen erläutert.

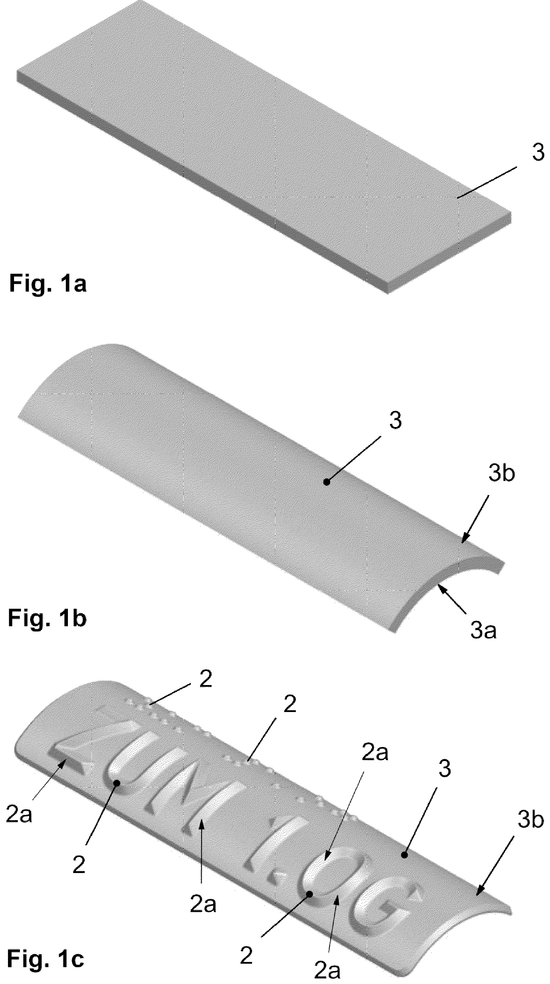

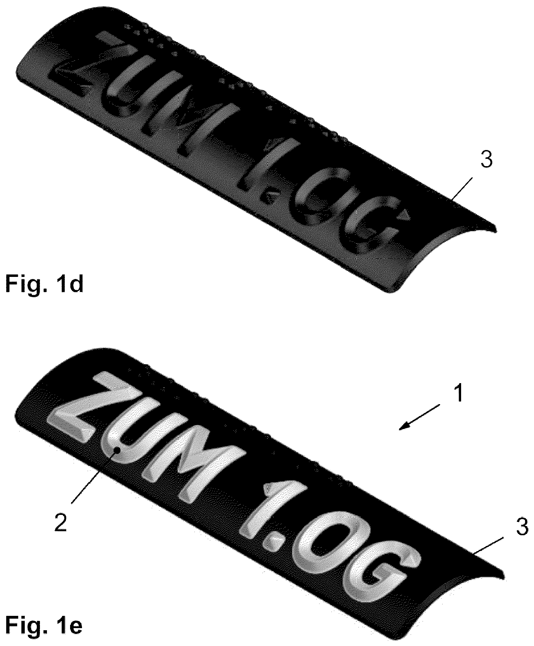

**Fig. 1a** bis **Fig. 1e** zeigen eine Ausführung des erfindungsgemäßen Verfahrens zur Herstellung eines taktilen Schildes 1 mit taktilen Strukturen 2 zur Orientierung von blinden und seheingeschränkten Menschen. Das taktile Schild weist eine gekrümmte Grundfläche zur Auflage auf eine das taktile Schild tragende gekrümmte Oberfläche eines Trägerobjektes auf. Das Trägerobjekt kann beispielsweise ein Handlauf oder eine Haltestange sein, ohne dass die Erfindung hierauf beschränkt wäre. In den **Fig. 1****a** bis **Fig. 1e** ist kein Trägerobjekt dargestellt.

In einer Ausführung umfasst das erfindungsgemäße Verfahren die folgenden Schritte:
a) Bereitstellung eines metallischen, ebenen Plattenelementes 3 (vgl. **Fig. 1a****).** Das Plattenelement ist vorzugsweise aus Aluminium oder einer Aluminiumlegierung gebildet, ohne dass die Erfindung auf diese Metalle beschränkt wäre.
b) Krümmung des ebenen Plattenelementes mit einem der gekrümmten Oberfläche des Trägerobjektes entsprechenden Biegeradius mittels eines Umformprozesses (vgl. **Fig. 1b****).** Bei der dargestellten Ausführung erhält das Plattenelement bei der Krümmung eine konkave Seite 3a, die als an der gekrümmten Oberfläche des Trägerobjektes anliegende Grundfläche des Plattenelementes dient. Die Umformung kann beispielsweise mit einer hydraulischen Presse erfolgen, wobei auch andere Ausführungen denkbar sind.
c) An dem gekrümmten Plattenelement erfolgt anschließend die Ausformung der taktilen Strukturen 2 auf einer der Grundfläche gegenüberliegenden Fläche des Plattenelementes. In einer ersten Variante erfolgt die Ausformung der taktilen Strukturen durch ein 3D-Fräsen des Plattenelementes. Dabei wird Material an der der konkaven Grundfläche 3a des Plattenelementes 3 gegenüberliegenden konvexen Fläche 3b des Plattenelementes 3 Material abgetragen. Durch Entfernen von Material wird die Schichtdicke des Plattenelementes lokal verringert. Dabei verbleiben Bereiche mit größerer Schichtdicke und Bereiche mit kleinerer Schichtdicke, sodass damit Erhebungen an der konvexen Seite 3b (zur Grundfläche gegenüberliegende Fläche) des Plattenelementes 3 herausgearbeitet werden, welche dann die taktilen Strukturen 2 bilden. In der dargestellten Ausführung umfassen die taktilen Strukturen 2 sowohl Bereiche mit Brailleschrift als auch Bereiche mit Profilschrift. Beim Fräsen der taktilen Strukturen 2 werden zumindest abschnittsweise die Seitenwände der taktilen Strukturen 2 angeschrägt. Bei der dargestellten Ausführung sind zumindest die als Profilschrift ausgeführten Bereiche der taktilen Strukturen mit abgeschrägten Seitenwänden 2a ausgebildet. Damit weisen die Buchstaben der Profilschrift eine Prismenform auf, wobei sich die Oberflächen der Buchstaben damit nach oben (bzw. von der Grundfläche weg) verjüngen (vgl. **Fig. 1c****).**
d) Nach der Ausformung der taktilen Strukturen 2 erfolgt eine Einfärbung an der Oberfläche der zur Grundfläche gegenüberliegenden Fläche 3a des Plattenelementes 3 mit den taktilen Strukturen 2. Bei einem aus Aluminium oder einer Aluminiumlegierung gebildeten Grundkörper kann die Einfärbung beispielsweise durch eine Eloxalschicht gebildet werden, wobei im Eloxalverfahren ein Färbemittel zum Einfärben der Eloxalschicht zugeführt wird. Alternativ kann die der Grundfläche gegenüberliegende Fläche des Plattenelementes 3 mit den taktilen Strukturen auch direkt mit einem Farbstoff benetzt werden. Zum Erzeugen eines hohen optischen Kontrastes am fertigen taktilen Schild 1 wird vorzugsweise eine schwarze Färbung eingesetzt (vgl. **Fig. 1d****).** Je nach Einsatzzweck sind aber auch andere Farbgestaltungen möglich.
e) Nach der Einfärbung wird diese an zumindest einem Teil der taktilen Strukturen wieder entfernt. Vorzugsweise erfolgt die Entfernung der Einfärbung an zumindest einem Teil der taktilen Strukturen mittels 3D-Fräsen. In der dargestellten Ausführung wurde die hier schwarze Einfärbung an den die Profilschrift enthaltenen Bereiche der taktilen Strukturen 2 entfernt. Die Profilschrift erscheint damit in der Farbe des Aluminiums bzw. der Aluminiumlegierung des Plattenelementes 3 und hebt sich damit optisch deutlich von der verbliebenen schwarzen Einfärbung der anderen Bereiche der Oberfläche des Plattenelementes 3 ab. Alternativ wird die Einfärbung auch mittels Schleifen oder Laserabtrag entfernt. Auch eine Kombination aus den genannten Verfahren zum Abtragen der Einfärbung kann eingesetzt werden.

In einer weiteren Ausführung umfasst das erfindungsgemäße Verfahren die folgenden Schritte:
a) Bereitstellung eines metallischen, ebenen Grundkörpers 3 analog zum Schritt a) der zuvor beschriebenen Ausführung.
b) Krümmung des ebenen Grundkörpers mit einem der gekrümmten Oberfläche des Trägerobjektes entsprechenden Biegeradius mittels eins Umformprozesses analog zum Schritt b) der zuvor beschriebenen Ausführung.
c) Abweichend zur vorher beschriebenen Ausführung erfolgt die Ausformung der taktilen Strukturen 2 durch Auftragen eines metallischen Werkstoffs mittels eines 3D-Druckverfahrens. Vorzugsweise wird als 3D-Druckverfahren ein Metall-Laser-Sinterverfahren oder ein Elektronenstrahlschmelzverfahren eingesetzt. Bei einem aus Aluminium oder einer Aluminiumlegierung gebildeten Plattenelement 3 ist auch der zum Auftragen verwendete metallische Werkstoff vorzugsweise Aluminium oder eine Aluminiumlegierung. Das Auftragen des metallischen Werkstoffs kann dabei in einer Lage oder auch mehrlagig erfolgen. Der metallische Werkstoff wird dabei so aufgetragen, dass die Seitenwände 2a bereits eine angeschrägte Kontur erhalten. Oder der metallische Werkstoff wird so aufgetragen, dass die Seitenwände 2a der taktilen Strukturen senkrecht verlaufen und anschließend mittels 3D-Fräsen angeschrägt werden.
d) Nach der Ausformung der taktilen Strukturen 2 erfolgt eine Einfärbung analog zum Schritt d) der zuvor beschriebenen Ausführung.
e) Analog zum Schritt e) der zuvor beschriebenen Ausführung wird nach der Einfärbung diese an zumindest einem Teil der taktilen Strukturen wieder entfernt (z.B. durch Schleifen, Laserabtrag oder 3D-Fräsen oder einer Kombination hieraus).

In einer weiteren Ausführung ist das Plattenelement aus einem Kunststoff gebildet. Hier umfasst das Verfahren die folgenden Schritte:
a) Bereitstellung des gekrümmten Plattenelementes aus Kunststoff mit der gekrümmten Grundfläche,
b) Ausformung der taktilen Strukturen auf der der Grundfläche gegenüberliegenden Fläche des gekrümmten Plattenelementes durch Auftragen eines Kunststoffs mittels eines 3D-Druckverfahrens. Vorzugsweise wird als 3D-Druckverfahren Fused Deposition Modeling oder selektive Lasersintern eingesetzt. Optional erfolgt das Auftragen des Kunststoffs derart, dass die Seitenwände 2a eine angeschrägte Kontur erhalten. Weiterhin optional wird der Kunststoff so aufgetragen, dass die Seitenwände 2a der taktilen Strukturen senkrecht verlaufen und anschließend mittels 3D-Fräsen angeschrägt werden.
c) Nach der Ausformung der taktilen Strukturen 2 erfolgt eine Einfärbung der Oberfläche der der Grundfläche gegenüberliegenden Fläche mit den taktilen Strukturen. Zur Einfärbung wird beispielsweise eine Farbe aufgesprüht oder aufgestrichen.
d) Analog zum Schritt e) der zuvor beschriebenen Ausführung wird nach der Einfärbung diese Einfärbung an zumindest einem Teil der taktilen Strukturen wieder entfernt (z.B. durch Schleifen, Laserabtrag oder 3D-Fräsen oder einer Kombination hieraus).

In einer weiteren Ausführung ist das Plattenelement aus einem Kunststoff gebildet. Hier umfasst das Verfahren die folgenden Schritte:
a) Bereitstellung des gekrümmten Plattenelementes aus Kunststoff mit der gekrümmten Grundfläche,
b) Ausformung der taktilen Strukturen auf der der Grundfläche gegenüberliegenden Fläche des gekrümmten Plattenelementes durch ein 3D-Fräsen des Plattenelementes. Dabei wird Kunststoffmaterial des Plattenelementes an der der konkaven Grundfläche 3a des Plattenelementes 3 gegenüberliegenden konvexen Fläche 3b des Plattenelementes 3 Material abgetragen. Durch Entfernen von Kunststoffmaterial wird die Schichtdicke des Plattenelementes lokal verringert. Dabei verbleiben Bereiche mit größerer Schichtdicke und Bereiche mit kleinerer Schichtdicke, sodass damit Erhebungen an der konvexen Seite 3b (zur Grundfläche gegenüberliegende Fläche) des Plattenelementes 3 herausgearbeitet, welche dann die taktilen Strukturen 2 bilden. Beim Fräsen der taktilen Strukturen 2 werden optional zumindest abschnittsweise die Seitenwände der taktilen Strukturen 2 angeschrägt, um beispielsweise die Buchstaben einer Profilschrift in Prismenform auszubilden.
c) Nach der Ausformung der taktilen Strukturen 2 erfolgt eine Einfärbung der Oberfläche der der Grundfläche gegenüberliegenden Fläche mit den taktilen Strukturen. Zur Einfärbung wird beispielsweise eine Farbe aufgesprüht oder aufgestrichen.
d) Analog zum Schritt d) der vorherig beschriebenen Ausführung wird nach der Einfärbung diese Einfärbung an zumindest einem Teil der taktilen Strukturen wieder entfernt.

Das in den Ausführungsbeispielen aufgeführte 3D-Fräsen erfolgt mittels einer 3-Achsen-Fräse, einer 4-Achsen-Fräse, einer 5-Achsen-Fräse oder einer 6-Achsen-Fräse.

In weiteren Ausführungen kann abhängig von der Ausformung des Trägerobjektes natürlich die Grundfläche des gekrümmten Plattenelements 3 auch eine konvexe Seite ausbilden (wenn die Oberfläche des Trägerobjekts, an welcher das taktile Schild 1 angebracht werden soll, konkav ausgebildet ist). Dementsprechend wäre im diesen Fall die der konvexen Grundfläche des Plattenelementes 3 gegenüberliegende Fläche des Plattenelementes 3 konkav ausgeführt. Die zuvor beschriebenen Verfahrensschritte würden hier analog ausgeführt werden.

### Bezugszeichenliste

- 1: taktiles Schild
- 2: taktile Strukturen
- 2a: Seitenwände der taktilen Strukturen 2
- 3: Grundkörper, Plattenelement
- 3a: konkave Seite des gekrümmten Grundkörpers 3
- 3b: konvexe Seite des gekrümmten Grundkörpers 3

## Patentansprüche

1. Verfahren zur Herstellung eines taktilen Schildes (1) mit taktilen Strukturen (2) zur Orientierung von blinden und seheingeschränkten Menschen, wobei das taktile Schild (1) eine gekrümmte Grundfläche zur Auflage auf eine das taktile Schild (1) tragende gekrümmte Oberfläche eines Trägerobjektes aufweist, **dadurch gekennzeichnet, dass** das Verfahren die folgenden Schritte umfasst:
a) Bereitstellung eines Grundkörpers (3) in Form eines gekrümmten Plattenelementes mit der gekrümmten Grundfläche,
b) Ausformung der taktilen Strukturen (2) auf der der Grundfläche gegenüberliegenden Fläche des gekrümmten Plattenelementes,
c) Einfärbung der Oberfläche der der Grundfläche gegenüberliegenden Fläche mit den taktilen Strukturen (2),
d) Entfernung der Einfärbung an zumindest einem Teil der taktilen Strukturen (2).

2. Verfahren nach Anspruch 1, **dadurch gekennzeichnet, dass** zur Bereitstellung des gekrümmten Plattenelementes zunächst ein ebenes Plattenelement bereitgestellt wird und dieses ebene Plattenelement mit einem der gekrümmten Oberfläche des Trägerobjektes entsprechenden Biegeradius mittels eines Umformprozesses gekrümmt wird.

3. Verfahren nach einem der vorgenannten Ansprüche, **dadurch gekennzeichnet, dass** das Material des Plattenelementes Metall oder Kunststoff ist.

4. Verfahren nach Anspruch 3, **dadurch gekennzeichnet, dass** im Falle eines aus Metall gebildeten Plattenelementes der Umformprozess mit einer hydraulischen Presse erfolgt.

5. Verfahren nach einem der vorgenannten Ansprüche, **dadurch gekennzeichnet, dass** die Einfärbung der Oberfläche der der Grundfläche gegenüberliegenden Fläche mittels einer Farbbeschichtung oder im Falle eines aus Metall gebildeten Plattenelementes mittels Durchführung eines Oxidationsschritts unter Zugabe eines Färbemittels erfolgt.

6. Verfahren nach einem der vorgenannten Ansprüche, **dadurch gekennzeichnet, dass** die Ausformung der taktilen Strukturen (2) durch ein 3D-Fräsen des Plattenelementes an der der Grundfläche gegenüberliegenden Fläche des Plattenelementes erfolgt, wobei dabei durch Entfernen von Material des Plattenelementes Erhebungen herausgearbeitet werden, welche die taktilen Strukturen (2) bilden.

7. Verfahren nach Anspruch 3, **dadurch gekennzeichnet, dass** im Falle eines aus Metall gebildeten Plattenelementes die Ausformung der taktilen Strukturen (2) durch Auftragen eines metallischen Werkstoffs mittels eines Metall-3D-Druckverfahrens erfolgt oder dass im Falle eines aus Kunststoff gebildeten Plattenelementes die Ausformung der taktilen Strukturen (2) durch Auftragen eines Kunststoffs mittels eines Kunststoff-3D-Druckverfahrens erfolgt.

8. Verfahren nach Anspruch 7, **dadurch gekennzeichnet, dass** beim Auftragen des metallischen Werkstoffs oder des Kunststoffs zumindest abschnittsweise Seitenwände (2a) der taktilen Strukturen (2) angeschrägt ausgebildet.

9. Verfahren nach Anspruch 7 oder 8, **dadurch gekennzeichnet, dass** im Falle des metallischen Werkstoffs als Metall-3D-Druckverfahren ein Metall-Laser-Sinterverfahren oder ein Elektronenstrahlschmelzverfahren eingesetzt wird oder dass im Falle des Kunststoffs als Kunststoff-3D-Druckverfahren das Fused Deposition Modeling oder das selektive Lasersintern eingesetzt wird.

10. Verfahren nach einem der vorgenannten Ansprüche, **dadurch gekennzeichnet, dass** zumindest abschnittsweise Seitenwände (2a) der taktilen Strukturen (2) vor der Einfärbung mittels 3D-Fräsen angeschrägt werden.

11. Verfahren nach einem der vorgenannten Ansprüche, **dadurch gekennzeichnet, dass** die Entfernung der Einfärbung an zumindest einem Teil der taktilen Strukturen (2) mittels 3D-Fräsen, Schleifen oder Laserabtrag erfolgt.

12. Verfahren nach einem der Ansprüche 6, 10 oder 11, **dadurch gekennzeichnet, dass** das 3D-Fräsen mittels einer 3-Achsen-Fräse oder einer 4-Achsen-Fräse oder einer 5-Achsen-Fräse oder einer 6-Achsen-Fräse erfolgt.

13. Verfahren nach einem der Ansprüche 3 bis 12, **dadurch gekennzeichnet, dass** im Falle des aus Metall gebildeten Plattenelementes das Metall Aluminium oder einer Aluminiumlegierung ist.

14. Taktiles Schild (1), gebildet mit einem Verfahren nach einem der vorgenannten Ansprüche.
